# EUROPÄISCHE PATENTANMELDUNG

(11) **EP 1 547 911 A2**
(43) Veröffentlichungstag der Anmeldung: **29.06.2005**
(21) Anmeldenummer: 04030437.0
(22) Anmeldetag: 22.12.2004
(51) Int. Cl.: B62H 3/10

(54) **Fahrradhalter und/oder Fahrradständer**

(30) Priorität: 23.12.2003 DE 10360822; 23.12.2003 DE 20319940 U
(71) Anmelder: Rawotec GmbH, 72513 Hettingen (DE)
(72) Erfinder: Schairer, Rainer, 72458 Albstadt (DE); Müller-Beiter, Wolfgang, 72517 Sigmaringendorf (DE)
(74) Vertreter: Kohler Schmid Möbus

(57) **Zusammenfassung**

Ein Fahrradhalter und/oder Fahrradständer (100) mit einem Stützfuß (110) und einer daran angeordneten Haltevorrichtung (111, 112) für zwei Streben eines Fahrradrahmens, wobei der Stützfuß einen Basisteil (114) und einen Schaft (119) aufweist und der Basisteil (114) derart ausgebildet ist, dass der Stützfuß (110) darauf abgestellt oder mit seiner Hilfe an einer Wand oder Decke montierbar ist, und wobei der Schaft (119) derart ausgebildet ist, dass auf ihm bei einer Wandmontage des Stützfußes (110) mindestens ein Fahrrad abrutschsicher mit einem Rahmenteil aufsetzbar ist.

## Beschreibung

Die Erfindung betrifft einen Fahrradhalter und/oder Fahrradständer zur Aufbewahrung des Fahrrades und/oder zur Montage / Wartung von Teilen des Fahrrades.

Derartige Fahrradhalter und/oder Fahrradständer sind allgemein bekannt. Bekannt ist insbesondere die Aufnahme des Fahrrades am Hinterbau durch einen Fahrradhalter und/oder Fahrradständer.

Viele Fahrräder, vor allem im sportlich orientierten Bereich, werden aus Sicherheits- und / oder Gewichtsgründen werksseitig nicht mit Haltern und/oder Ständern ausgestattet.

Nachteilig ist bei allen derzeit angebotenen Systemen, dass eine Kombination aus einfacher, variabler Handhabung, sicherer Aufbewahrung des Fahrrades und der Möglichkeit, einfache Wartungsarbeiten (wie z.B. das Ölen der Kette, der Hinterradausbau) durchzuführen, nicht gegeben ist. Insbesondere nehmen die bekannten Systeme keine Rücksicht auf die beim Kunden vorhandenen räumlichen Gegebenheiten zum Aufbewahren von Fahrrädern.

Der Erfindung liegt das technische Problem zugrunde, einen Fahrradhalter und/oder Fahrradständer zu schaffen, der einfach zu bedienen ist und eine sichere Abstellmöglichkeit bzw. Aufbewahrungsmöglichkeit des Fahrrades bei unterschiedlichen räumlichen Gegebenheiten ermöglicht.

Dieses technische Problem wird durch einen Fahrradhalter und/oder Fahrradständer mit einem Stützfuß und einer daran angeordneten Haltevorrichtung für zwei Streben eines Fahrradrahmens gelöst, der erfindungsgemäß dadurch gekennzeichnet ist, dass der Stützfuß einen Basisteil und einen Schaft aufweist, wobei der Basisteil derart ausgebildet ist, dass der Stützfuß darauf abgestellt oder mit seiner Hilfe an einer Wand oder Decke montierbar ist, und wobei der Schaft derart ausgebildet ist, dass auf ihn bei einer Wandmontage des Stützfußes mindestens ein Fahrrad abrutschsicher mit einem Rahmenteil aufsetzbar ist.

Je nach den räumlichen Gegebenheiten kann mit dem erfindungsgemäßen Fahrradhalter oder Fahrradständer das Fahrrad stehend oder hängend aufbewahrt werden. Bei einer Wandmontage halten zwei der erfindungsgemäßen Fahrradhalter mindestens ein Fahrrad sicher und stabil an der Wand. Sowohl in der hängenden als auch in der stehenden Position können Wartungs- und Reparaturarbeiten am Fahrrad problemlos vorgenommen werden.

Die Haltevorrichtung für die zwei Streben eines Fahrrads kann auch abnehmbar am Stützfuß angeordnet sein. Da dieses Haltevorrichtung nur bei der stehenden Aufbewahrung des Fahrrads erforderlich ist, kann die Haltevorrichtung bei einer Wandmontage des Fahrradhalters abgenommen werden. Auch bei einer Wandmontage des Halters kann die Haltevorrichtung jedoch am Stützfuß verbleiben und beispielsweise zum Aufhängen eines Fahrradhelms oder dergleichen verwendet werden.

Die Haltevorrichtung kann von zwei im Querschnitt U-förmigen Strebenhaltern gebildet sein. Dabei ist es besonders vorteilhaft, wenn die Strebenhalter schwenkbar am Stützfuß angeordnet sind. Die Strebenhalter passen sich dann an unterschiedliche Winkelstellungen der Streben eines Fahrradrahmens an. Der erfindungsgemäße Fahrradhalter und/oder Fahrradständer lässt sich somit für verschiedene Fahrräder einsetzen. Die Flexibilität seines Einsatzes lässt sich noch dadurch erhöhen, dass die Strebenhalter in ihrem gegenseitigen Abstand variabel am Stützfuß befestigbar sein können. Bei einer solchen Ausbildung können praktisch aller Fahrräder mit dem Fahrradständer oder Fahrradhalter abgestellt werden.

Sollen verschiedene Fahrräder mit demselben Ständer gehaltert werden, so ist es weiter vorteilhaft, wenn die Strebenhalter mittels einer Steckverbindung werkzeuglos am Stützfuß befestigbar sind. Sie lassen sich dann auf rasche und einfache Weise umstecken und so an den jeweiligen Fahrradrahmen anpassen.

Weiter können die Strebenhalter U-förmig gebogene flächige Elemente sein. Im Gegensatz zu einfachen Haken bieten sie dann für die Streben nicht nur linienförmige Auflagen, sondern flächige Auflagen, wodurch ein sehr viel stabilerer Stand erreicht wird.

Das Basisteil kann auf unterschiedlichste Weise gestaltet sein. Bei einer bevorzugten Ausführungsform weist es eine Fußplatte auf. Die Fußplatte kann mit Öffnungen zum Einhängen an Wandhaken oder Schrauben versehen sein. Weiter ist es möglich, am Basisteil einen Stützbügel zur Erhöhung der Standsicherheit bzw. der Stabilität des Fahrradständers oder Fahrradhalters zu befestigen. Mit Hilfe eines solchen Stützbügels kann ein Fahrrad auch auf unebenem Untergrund, beispielsweise im Freien, abgestellt werden. Auch bei der Wandmontage ist ein solcher Bügel von Vorteil, da er die Stabilität des Halters erhöht.

Bei einer zweiten bevorzugten Ausgestaltung des Fahrradhalters und/oder Fahrradständers weist die Haltevorrichtung einen Arm auf, welcher mit dem Stützfuß schwenkbar verbunden ist und jeweils einen Strebenhalter für eine Strebe des Fahrrades aufweist. Stützfuß und Arm sind unter Begrenzung eines Winkels gegeneinander verdrehbar oder verstellbar. Diese Verstellung kann die Rahmengeometrie berücksichtigen. Der Fahrradhalter und/oder Fahrradständer ist mit dem Fahrrad nicht fest verbunden und wird bei Bedarf an den beiden Hinterbaustreben des Fahrrades zumindest an einer Fahrradseite angesetzt. Durch leichtes Anheben des Hinterrades kann der Stützfuß des erfindungsgemäßen Fahrradhalters und/oder Fahrradständers selbsttätig in seine Endposition herunterfallen und aufgestellt werden. Auch bei dieser Ausgestaltung kann der Fahrradständer auch als Wand- oder Deckenhalterung benutzt werden, indem der Stützfuß an der Wand oder Decke befestigt wird.

Bevorzugt ist es, dass der Stützfuß und der Arm lösbar verbunden sind. Der Fahrradhalter und/oder Fahrradständer kann leicht zerlegt und transportiert werden. Insbesondere wenn die Komponenten des Fahrradhalters und/oder Fahrradständer durch flache Teile ausgebildet sind, benötigt der zerlegte Fahrradhalter und/oder Fahrradständer wenig Stauraum. Zur Herstellung kommen Kunststoffe oder Leichtmetalle wie Aluminium in Betracht.

Die gelenkige Verbindung zwischen Stützfuß und Arm lässt sich auf einfache Weise am besten durch einen Zapfen zum Einstecken in ein Loch oder in eine Durchgangsbohrung des Stützfußes realisieren.

Wenn zumindest ein Strebenhalter lösbar und relativ zu dem anderen Strebenhalter positionierbar oder verstellbar an dem Arm angebracht ist, kann der Abstand zwischen den Strebenhaltern auf die Rahmengeometrie angepasst werden. Dies gewährleistet, dass Rennräder, Mountainbikes usw. unterschiedlicher Größe und Rahmengeometrie mithilfe des erfindungsgemäßen Fahrradständers aufgestellt werden können.

Diese Anpassbarkeit kann beispielsweise dadurch umgesetzt werden, dass der eine Strebenhalter Steckelemente zum Einstecken in Löcher des Armes aufweist.

Der Strebenhalter einer Ausführungsform kann eine J-förmige Ausgestaltung besitzen. Durch die J-Form kann eine Strebe besonders leicht unter- und hintergriffen werden.

Der Stützfuß einer anderen Ausführungsform kann plattenförmig oder auch annähernd dreieckförmig ausgebildet sein. Der Stützfuß benötigt dann nur wenig Raum. Der Stützfuß verjüngt sich in Richtung Fahrradhinterbau, so dass dieser frei zugänglich bleibt. Die größere Seite des Stützfußes gewährleistet einen sicheren Stand. An Stelle dieser Ausgestaltung sind auch beliebige andere Konstruktionen denkbar wie kegelförmige Stützfüße oder trapezförmige Ausbildungen.

Der erfindungsgemäße Fahrradhalter und/oder Fahrradständer hat die weiteren Vorteile einer sicheren Halterung oder eines sicheren Standes, des freien Drehens des Hinterrades, so dass ein Ölen der Kette oder das Ausbauen des Hinterrades möglich ist.

Der Fahrradhalter und/oder Fahrradständer kann mindestens teilweise aus einem weichen, Lack schonenden Material gefertigt sein oder einen Überzug aus einem solchen Material aufweisen. Bei einer Fertigung des Ständers oder zumindest der Strebenhalter ist eine beschädigungsfreie Aufbewahrung von Fahrrädern auf einfache Weise möglich.

Zwei bevorzugte Ausführungsbeispiele der Erfindung sind in der Zeichnung dargestellt und werden anhand der Figuren der Zeichnung näher erläutert. Die Zeichnung ist schematisch und nicht maßstäblich zu verstehen. Es zeigen:
- **Fig. 1**: eine perspektivische Ansicht eines ersten Ausführungsbeispiels eines erfindungsgemäßen Fahrradständers;
- **Fig. 2**: eine perspektivische Detailansicht des Fahrradständers aus Fig. 1;
- **Fig. 3**: eine zweite Detailansicht des Fahrradständers aus Fig. 1;
- **Fig. 4**: eine perspektivische Ansicht eines auf zwei erfindungsgemäßen Fahrradständern in einer weiteren Ausführungsform aufgestellten Rennrads;
- **Fig. 5**: eine perspektivische Detailansicht des Angriffs eines Fahrradständers aus Fig. 4 an einer hinteren Strebe des Rennrads;
- **Fig. 6**: eine weitere perspektivische Detailansicht des Angriffs eines Fahrradständers aus Fig. 4 an einer hinteren Strebe des Rennrads;
- **Fig. 7**: perspektivische Ansichten von Teilen des Fahrradständers gemäß Fig. 4 bis 6.

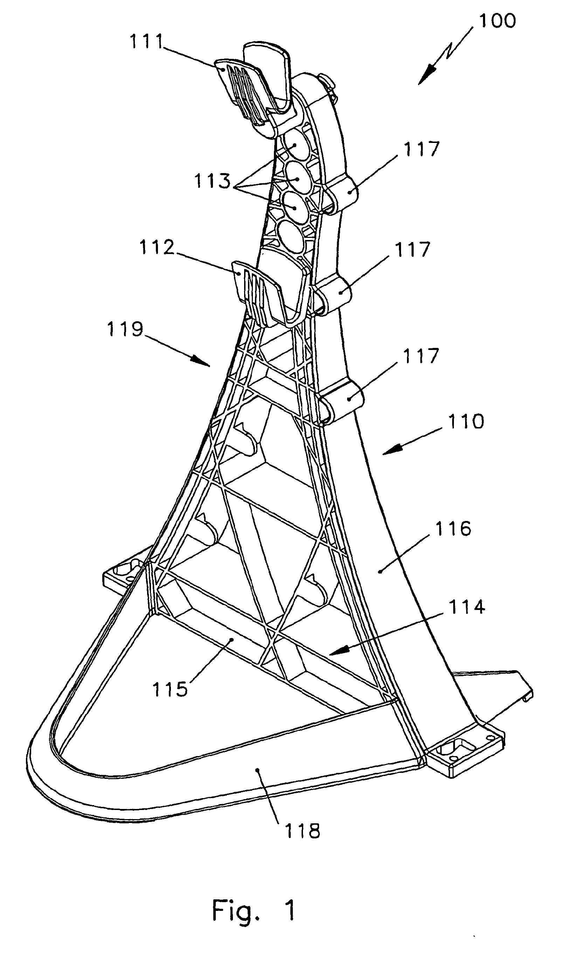

**Fig. 1** zeigt einen Fahrradständer **100** mit einem Stützfuß **110** und einer daran angeordneten Haltevorrichtung für Streben des Rahmens eines hier nicht dargestellten Fahrrads, wobei die Haltevorrichtung hier von zwei Strebenhaltern **111** und **112** gebildet wird. Die Strebenhalter **111** und **112** sind U-förmige Teile, die schwenkbar an einem Schaft 119 des Stützfußes **110** befestigt sind. Sie können sich somit auf die unterschiedliche Winkelstellung zwischen den Streben der Rahmen unterschiedlicher Fahrräder automatisch einstellen. Außerdem ist der gegenseitige Abstand der Strebenhalter 111 und 112 einstellbar. Hierzu ist am Stützfuß 110, der eine Rippenstruktur aufweist, ein Lochraster **113** vorgesehen.

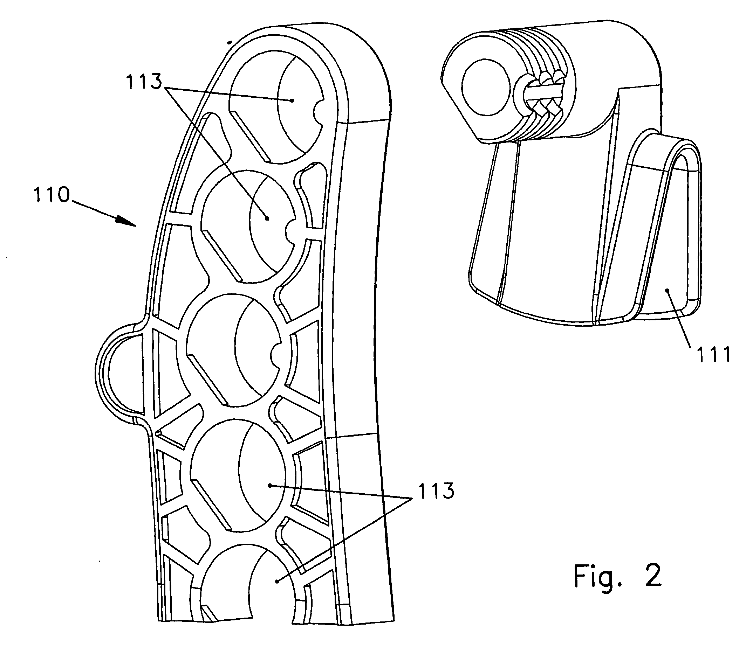

Die austauschbare und drehbare Halterung wird insbesondere auch durch **Fig. 2** verdeutlicht, die das obere Ende des Stützfußes 110 mit dem Lochraster 113 und dem oberen Strebenhalter 111 zeigt. Am unteren Ende des Stützfußes 110 ist ein sich verbreiterndes Basisteil **114** mit einer Fußplatte **115** angeordnet. Mit Hilfe der Fußplatte **115** kann der Ständer 100, wie in Fig. 1 dargestellt, auf dem Boden abgestellt werden. Die Fußplatte 115 kann jedoch auch an einer Wand oder Decke montiert werden. Die Wandmontage erfolgt dabei so, dass die Seite 116 des Stützfußschaftes 119 nach oben zeigt. Auf diese Seite 116 kann dann mindestens ein Fahrrad mit seinem Rahmen aufgesetzt werden. Zur Verhinderung eines Abrutschens des Fahrrads sind an der Seite 116 Nocken **117** angeordnet.

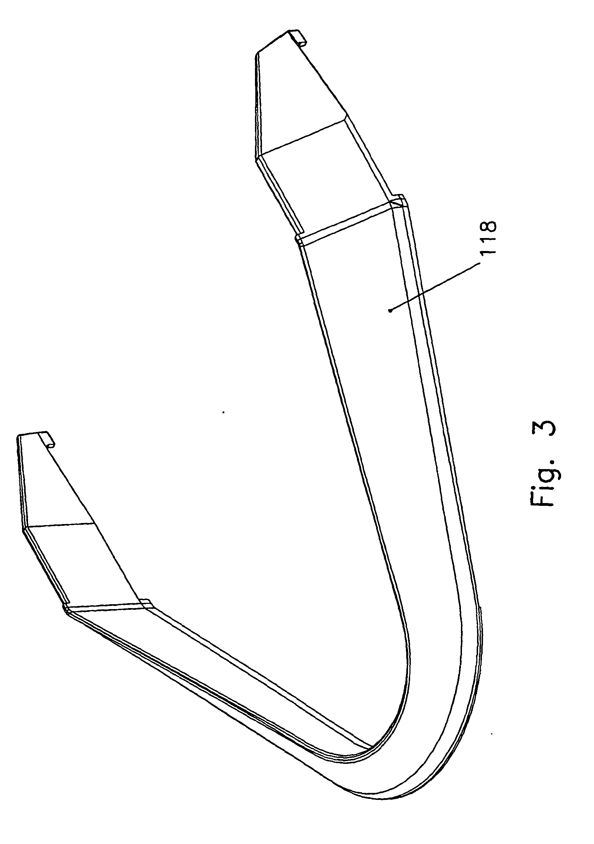

Zur Erhöhung der Standsicherheit ist außerdem am Basisteil 114 ein Stützbügel **118** befestigt. Dieser in **Fig. 3** in einer Detaildarstellung gezeigte Stützbügel **118** kann für eine Wandmontage des Stützfußes 110 jederzeit, ebenso wie die Strebenhalter 111 und 112, abgenommen werden. Alle Teile 118, 111 und 112 können jedoch bei einer Wandmontage auch am Stützfuß verbleiben. Der Stützbügel 118 erhöht dann die Stabilität des gesamten Fahrradhalters 100.

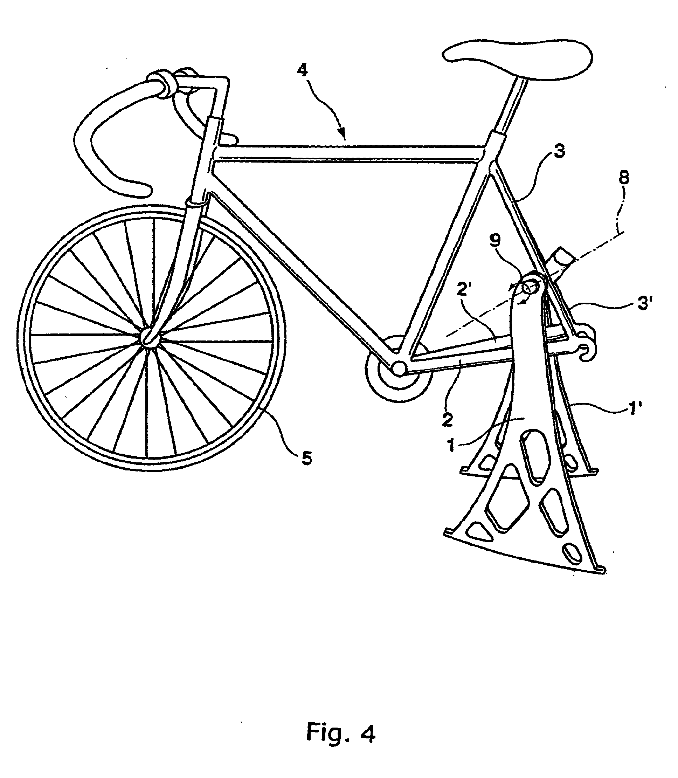

Die Figuren 4 bis 7 zeigen eine weitere Ausführungsform eines erfindungsgemäßen Fahrradständers in unterschiedliche Darstellungen.

Aus der **Fig. 4** ist ersichtlich, dass zwei Fahrradständer **1** und **1'** der zweiten Ausführungsform jeweils an hinteren Streben **2** und **3** bzw. **2'** und **3'** eines Rennrads **4** angreifen, um den Hinterbau des Rennrads 4 anzuheben. Das Hinterrad kann dadurch entnommen werden. Das Rennrad 4 steht auf dem Vorderrad **5** auf und ist im Bereich des Hinterbaus über die beiden Fahrradständer 1 und 1' abgestützt, welche bis auf die Anpassung auf die linke oder rechte Seite des Hinterbaus identisch ausgebildet sind. Der Übersicht halber und weil die Erfindung diese Rennradkomponenten nicht betrifft, sind zum Fahren des Rennrads erforderliche Teile wie Bremsen, Schaltung, Kette usw. in der Fig. 4 nicht gezeigt.

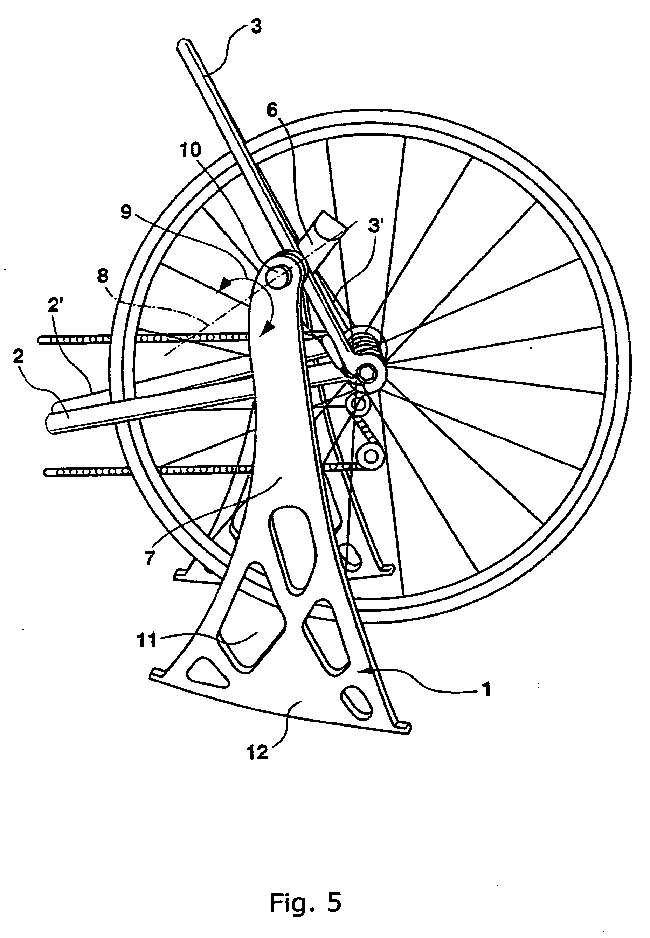

Gemäß **Fig. 5** umfasst der Fahrradständer 1 einen an zwei Streben 2, 3 oder 2', 3' angreifenden Arm **6** und einen Stützfuß **7,** welcher mit dem Arm 6 über eine Steckverbindung schwenkbar verbunden ist (Schwenkachse **8**, Schwenkrichtung parallel zu den Streben 2, 3 oder 2', 3' gemäß Doppelpfeil **9**; siehe auch Fig. 4). Der Stützfuß 7 weist an seinem den Streben 2, 3 zugeordneten Ende eine Bohrung auf, in welcher ein Zapfen **10** des Arms 6 drehbar gelagert ist. Weiterhin ist der Stützfuß 7 mit Löchern **11** versehen, um das Gewicht des Stützfußes 7 zu reduzieren, ohne seine Stabilität zu beeinträchtigen. Zur Stabilitätserhöhung und Aufstellsicherheit kann der Stützfuß 7 zusätzlich an seinem der Aufstellfläche zugeordneten Ende quer zur Stützfußfläche angeordnete nicht gezeigte Stützelemente besitzen. Die Stützelemente können beispielsweise lösbar mit dem Stützfuß 7 verbunden werden und durch auf der Aufstellfläche aufliegende Platten ausgebildet sein. Der Stützfuß 7 weist eine sich zum Zapfen 10 verjüngende annähernd dreieckige Form auf, damit einerseits eine gute Abstützung geschaffen wird und andererseits im Bereich der Streben 2, 3 eine gute Zugänglichkeit des Hinterbaus für Montagezwecke gegeben ist.

Es ist auch denkbar den Stützfußbereich **12** an einer Decke oder einer Wand zu befestigen, um das Rennrad hängend aufzubewahren.

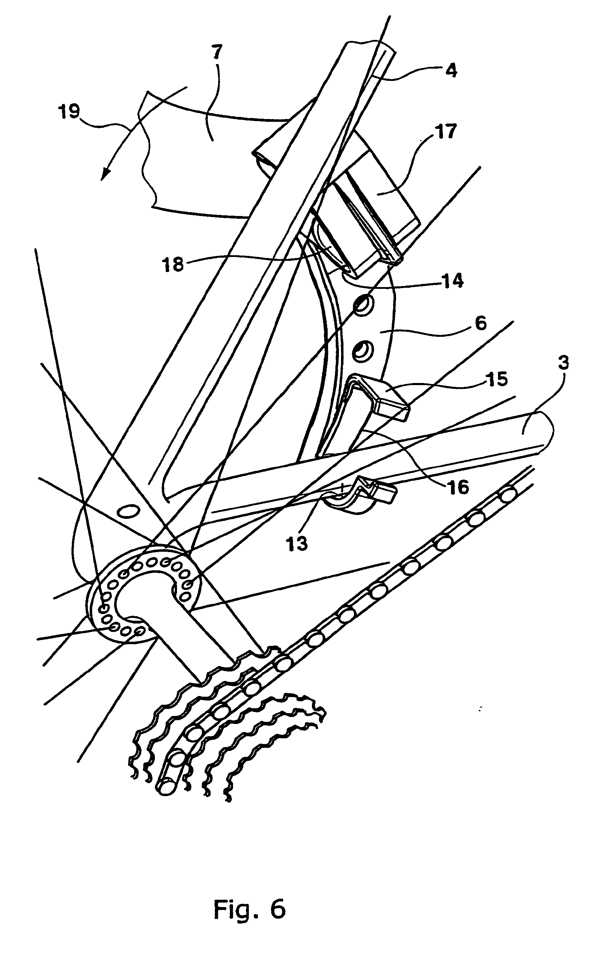

An dem Arm 6 sind zwei Auflagepunkte **13** und **14** für die Streben 2 und 3 vorgesehen. Bei der Anbringung des Fahrradständers 1 wird gemäß **Fig. 6** wie folgt vorgegangen: Der Stützfuß 7 wird vom Anwender gegriffen. Dabei ragt der Arm 6 nach unten in Richtung Aufstellfläche. In einem ersten Schritt unter- und hintergreift ein an dem Arm 6 befestigter J-förmiger erster Strebenhalter **15** die Strebe 3. Über die Halterröffnung **16** kann die Strebe 3 in den ersten Strebenhalter 15 eingehängt werden. Ein zweiter Strebenhalter **17** soll später die Strebe 4 in einem zweiten Schritt - in ähnlicher Weise wie der erste Strebenhalter 15 die Strebe 3 - die Strebe 4 aufnehmen. Die Strebe 4 kann in einer Mulde **18** des zweiten Strebenhalters 17 aufgenommen werden (siehe Fig. 4 und 5). Nach dem Einhängen der beiden Streben 3 und 4 kann der Stützfuß 7 herunter in Richtung **19** der Aufstellfläche geklappt werden. Hierbei kann das Gewicht des Stützfußes 7 ausgenutzt werden, indem der Stützfuß 7 nach dem Loslassen einfach nach unten fällt. Der Stützfuß 7 ist hinsichtlich seiner Länge so dimensioniert, dass das Hinterrad bei aufgestelltem Stützfuß 7 von der Aufstellfläche angehoben wird. Zum Abstellen des Rennrads 4 reicht ein Fahrradständer 1 mit zusätzlichen Stützelementen aus. Für Montagezwecke empfiehlt sich aber ein zweiter Fahrradständer 1' (siehe Fig. 4), damit das Rennrad sicher gehalten wird. Für die Wand- oder Deckenmontage gilt dies analog.

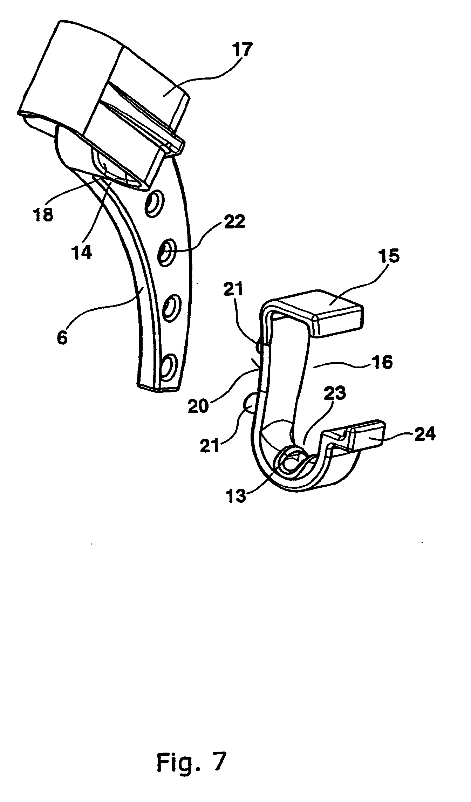

**Fig. 7** zeigt, dass erste Strebenhalter 15 auf den Arm 6 aufsteckbar ist. Hierzu weist der J-förmige Strebenhalter 15 an seiner Rückseite **20** Steckelemente **21** auf, welche in Löcher **22** an dem Arm 6 einsteckbar sind. Der sichelförmige Arm 6 besitzt mehrere in Längsrichtung des Arms 6 übereinander angeordnete Löcher 22, um den Abstand zwischen dem lösbar befestigten ersten Strebenhalter 15 und dem fest angeordneten zweiten ebenfalls J-förmigen Strebenhalter 17 an die Rahmengeometrie des Fahrrades anzupassen. Der Arm 6 besitzt eine sichelförmige Gestalt und eine entsprechende Krümmung, um beide Streben optimal in der ersten Mulde **23** und der zweiten Mulde 18 zu lagern. Der erste Strebenhalter 16 und der zweite Strebenhalter 17 weisen von gegenüberliegenden Seiten zugängliche Öffnungen zum Einlegen der Streben auf. Die Zugänglichkeit von der jeweils anderen Seite verhindert ein unbeabsichtigtes Herausfallen der Streben. Die Streben können nur nacheinander aber nicht gleichzeitig eingelegt oder herausgeführt werden. Nur nach dem Verkippen des Arms 6 ermöglicht das komplette Aushängen beider Streben.

Die Mulden 18 und 23 können mit einer rutschfesten oder den Rahmenlack schonenden Einlage oder Beschichtung ausgestattet sein. Ebenso können die Mulden 18 und 23 Vertiefungen besitzen, welche auf den Strebendurchmesser abgestimmt sind. In den Vertiefungen können Kabelzüge oder andere sich im Bereich der Strebe befindliche Fahrradkomponenten beschädigungsfrei aufgenommen werden. Auch die Strebenhalter 111, 112 des Fahrradständers 100 aus den Figuren 1 bis 3 lassen sich auf diese Weise ausbilden.

Der kettenseitige Strebenhalter 15 weist einen Absatz 24 zur Abstützung der Kette, insbesondere bei ausgebautem Hinterrad, auf. Die Kette kann über diesen Absatz 24 geführt werden, ohne dass die Kette herunterhängt.

## Patentansprüche

1. Fahrradhalter und/oder Fahrradständer (100, 1, 1') mit einem Stützfuß (110, 7) und einer daran angeordneten Haltevorrichtung (111, 112; 6, 15, 17) für zwei Streben (2, 3, 2', 3') eines Fahrradrahmens, **dadurch gekennzeichnet, dass** der Stützfuß (110, 7) einen Basisteil (114) und einen Schaft (119) aufweist, wobei der Basisteil (114) derart ausgestaltet ist, dass der Stützfuß (110, 7) auf dem Boden abgestellt oder mit seiner Hilfe an einer Wand oder Decke montierbar ist, und wobei der Schaft (119) derart ausgebildet ist, dass auf ihm bei einer Wandmontage des Stützfußes (110, 7) mindestens ein Fahrrad abrutschsicher mit einem Rahmenteil aufsetzbar ist

2. Fahrradhalter und/oder Fahrradständer nach Anspruch 1, **dadurch gekennzeichnet, dass** die Haltevorrichtung (111, 112, 6, 15, 17) für zwei Streben (2, 3, 2', 3') eines Fahrrad (4) abnehmbar am Stützfuß (110, 7) angeordnet ist.

3. Fahrradhalter und/oder Fahrradständern nach Anspruch 1 oder 2, **dadurch gekennzeichnet, dass** die Haltevorrichtung von zwei im Querschnitt U- oder V-förmigen, flächigen Strebenhaltern (111, 112) gebildet ist.

4. Fahrradhalter und/oder Fahrradständer nach Anspruch 3, **dadurch gekennzeichnet, dass** die Strebenhalter (111, 112, 15, 17) schwenkbar am Stützfuß (110, 7) angeordnet sind.

5. Fahrradhalter und/oder Fahrradständer nach Anspruch 3 oder 4, **dadurch gekennzeichnet, dass** die Strebenhalter (111, 112, 15, 17) in ihrem gegenseitigen Abstand variabel anordenbar sind.

6. Fahrradhalter und/oder Fahrradständer nach einem der Ansprüche 3 bis 5, **dadurch gekennzeichnet, dass** die Strebenhalter (111, 112, 15, 17) mittels einer Steckverbindung werkzeuglos am Stützfuß (110, 7) befestigbar sind.

7. Fahrradhalter und/oder Fahrradständer nach einem der Ansprüche 1 bis 6, **dadurch gekennzeichnet, dass** der Basisteil (114) eine Fußplatte (115) aufweist, die vorzugsweise mit Öffnungen zum Einhängen an Wandhaken oder Schrauben versehen ist.

8. Fahrradhalter und/oder Fahrradständer nach einem der Ansprüche 1 bis 7, **dadurch gekennzeichnet, dass** am Basisteil (114) ein Stützbügel (118) zur Erhöhung der Standsicherheit bzw. der Stabilität des Fahrradständers und/oder Fahrradhalters befestigbar ist.

9. Fahrradhalter und/oder Fahrradständer nach einem der Ansprüche 1 bis 8, **dadurch gekennzeichnet, dass** der Schaft (119) an der Auflageseite (116) für das mindestens eine Fahrrad (4) bei einer Wandmontage mit Haltenocken (117) zur Vermeidung eines Abrutschens des mindestens einen Fahrrads (4) versehen ist.

10. Fahrradhalter und/oder Fahrradständer (1, 1') nach Anspruch 1, **dadurch gekennzeichnet, dass** die Haltevorrichtung einen Arm (6) aufweist, welcher mit dem Stützfuß (7) schwenkbar verbunden ist und jeweils einen Strebenhalter (15, 17) für eine Strebe (2, 3, 2', 3') des Fahrrades (4) aufweist.

11. Fahrradhalter und/oder Fahrradständer nach einem oder mehreren der vorhergehenden Ansprüche, **dadurch gekennzeichnet, dass** der Stützfuß (110, 7) annähernd dreieckförmig ausgebildet ist und vorzugsweise eine Rippenstruktur aufweist.

12. Fahrradhalter und/oder Fahrradständer nach einem der vorhergehenden Ansprüche, **dadurch gekennzeichnet, dass** er mindestens teilweise aus einem weichen, Lack schonenden Material gefertigt ist oder einen Überzug aus einem solchen Material aufweist.
